# EUROPEAN PATENT APPLICATION

(11) **EP 2 166 268 A2**
(43) Date of publication of application: **24.03.2010**
(21) Application number: 09170446.0
(22) Date of filing: 16.09.2009
(51) Int. Cl.: F16L 59/02

(54) **Anti-corrosive insulated pipe section**

(30) Priority: 23.09.2008 FI 20085892
(71) Applicant: PAROC OY AB, 01300 Vantaa (FI)
(72) Inventor: Grott, Dominik, 62-700 Turek (PL)
(74) Representative: LEITZINGER OY

(57) **Abstract**

This invention relates to an anti-corrosive stone wool section (4) for insulating purposes, comprising at least one stone wool layer (1). Said stone wool layer (1) is provided on at least one surface with a protective layer (2) being a membrane made of polyvinyl chloride plastified (PVC-P) which is water proof but water vapour permeable, said protective layer extending beyond at least one, preferably only one, of the edges of a splitting (3) of the stone wool section (1), thereby forming a strip (2a) extending lengthwise of the insulating section (4) and intended for covering the joint (6) of the two edges of the splitting (3) in a sealed manner.

## Description

The present invention relates to an anti-corrosive stone wool section for insulating purposes, comprising at least one stone wool layer. The stone wool section is particularly intended for insulating outdoor pipelines subjected to rain, moisture and/or snow as well as other atmospheric conditions such as sun and low and high temperature.

At present, outdoor pipelines are insulated with e.g. stone wool, which is suitably fixed around the pipes and then sheeted with metal sheets at the installation site. Such known applications have several drawbacks.

A major problem is corrosion, generally concerning all pipes, but particularly concerning pipes where the temperature varies typically between 0 and +500 °C since especially in such cases any humidity trapped on the inside of the metal sheeting will condense and vaporise along with the temperature changes, but will not be able to permeate the metal sheeting, thereby leading to corrosion of the pipes, and eventually to leakage of the pipes.

Another problem is thermal energy loss, which usually is a result of the fact that heat leaks out via the joints of the metal sheets. Thermal energy loss as well as corrosion may also easily be caused by wrong/poor installation, damages to the metal sheets (e.g. due to dropped tools, or the like) and/or humidity at the installation stage.

All the above described factors, alone or together, impose a great risk of humidity, which leads to corrosion, and eventually to leakage. Usually, such leakages appear unexpectedly and may impose huge costs due to tie-up time and repair.

Furthermore, the presently used sheeting step at the work/installation site is a very time consuming step.

Hence, referring to what has been said above, there is a need for a waterproof but water vapour permeable insulating stone wool section which is corrosion resistant, which requires less installation work on the installation site, and which has at least some mechanical strength to make it shock-proof.

The above desired properties are provided for by the present invention, which is characterised in that the stone wool layer is provided on at least one surface with a protective layer being a membrane made of polyvinyl chloride plastified (PVC-P) which is water proof but water vapour permeable, said protective layer extending beyond at least one, preferably only one, of the edges of a splitting of the stone wool section, thereby forming a strip extending lengthwise of the insulating section and intended for covering the joint of the two edges of the splitting in a sealed manner.

In one preferred embodiment the protective layer is heat-weldable and said strip covering said joint is sealable by heat-welding. Preferably, the membrane made of polyvinyl chloride plastified (PVC-P) is reinforced with woven polyester fabric mesh, since such membrane is water proof, has high water vapour permeability, very excellent welding properties, and mechanical resistance.

Preferably, said protective layer is provided on the outer surface of the stone wool section.

For sealing a joint between two pipe insulating sections defined in claim 1, fitted one after the other, one may preferably use only a separate stripe made of the same material as the protective layer on the pipe sections, i.e. a separate strip of polyvinyl chloride plastified (PVC-P), with or without a reinforcing woven polyester fabric mesh. In such a case, the sealing of the separate stripe is advantageously done by heat-welding it to cover the joint area using simple tools, such as a roller and a builder's air-heater. Instead of heat-welding one may also use some chemical, such as adhesives or solvents (e.g. tetrahydrofuran when the protective layer is PVC-P).

In a further preferable embodiment, the protective layer in addition extends beyond at least one, preferably only one, of the ends of a first pipe insulating section, thereby forming a strip intended to circumferentially cover at least a part of a second successive pipe section's protective layer in a sealed, preferably heat-welded, manner. Also in this embodiment, both the lengthwise and widthwise (essentially a radial extension when the pipe section is installed around a pipe) integral extensions of the protective layer may be sealed using the same methods as described in connection with said first preferable embodiment.

The insulating stone wool section of the invention has the following advantageous properties:
- minimized thermal (energy) loss
- high temperature resistance for pipelines
- resistant to any atmosphere condition (example: rain, moisture, snow, sun, low & high temperature)
- mechanical resistance
- self drying - whenever a pipeline is hot the protective layer (or membrane) will allow water vapour pass out from the inside
- light product, no support construction needed
- cost efficient installation (fast and easy)
- cost efficient maintenance (fast and easy)

### Detailed Description

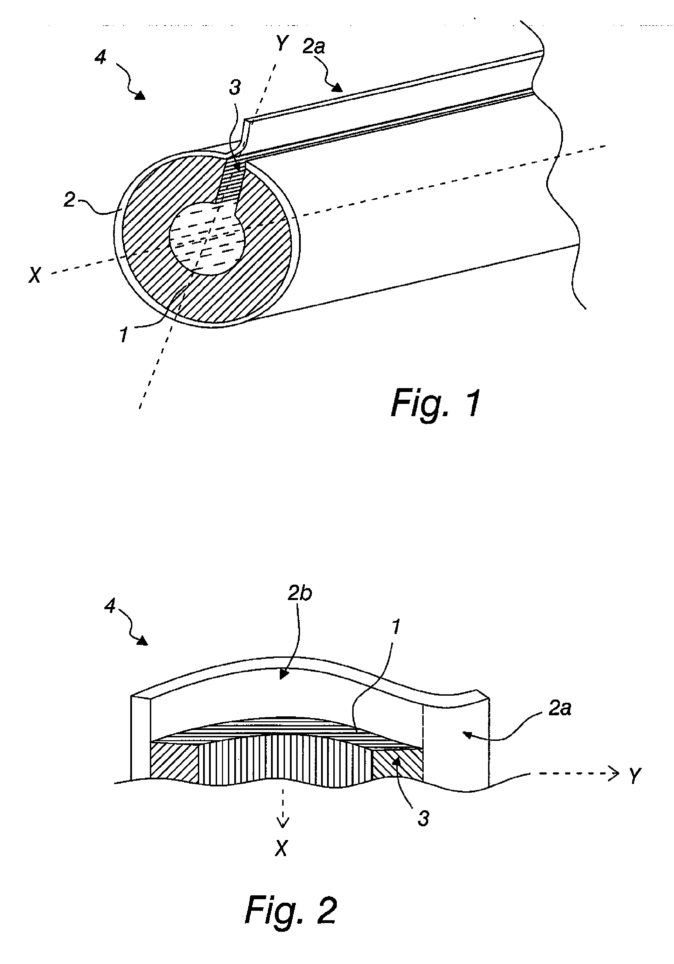

One embodiment of the present invention is in the following described in detail with reference to the accompanying figures 1 and 2. This embodiment description is however not to be interpreted as limiting the scope of protection sought in the claims.
- Figure 1: presents a stone wool section according to the invention as a perspective sketch,
- Figure 2: presents one end of a stone wool section according to the invention as a sectioned perspective sketch,
- Figure 3: is a perspective sketch of one way of adjoining of two insulating pipe sections of the invention, and
- Figure 4: is a perspective sketch of an alternative way of adjoining of two insulating pipe sections of the invention.

A stone wool insulation section 1 suitable for insulating pipelines, especially outdoor pipelines, and having the usual lengthwise splitting for making the fitting of the insulating section around a pipe possible, is covered with a rubber-based protective layer 2 (or facing). The plastics- and/or rubber-based protective layer 2 is attached to the outside of the stone wool section 1 by any suitable glue, or bonding agent or composition. The glue or the bonding agent/composition need not be applied over the entire outer surface of the wool section 1, it may well be added only point-wise.

The plastics- and/or rubber-based material must be both waterproof and have a high water vapour permeability, i.e. it must let water molecules in vapour phase pass through it so that any humidity on the inside of it may dry up, and still protect the wool on the inside from outside rain and moisture.

Advantageously, the protecting layer is a membrane made of polyvinyl chloride plastified (PVC-P) which is reinforced with a woven polyester fabric mesh. Such a protective layer also has the following advantageous properties:
- resistance to low and high temperatures
- high resistance against UV-radiation
- high stability to dimensional changes
- high resistance against mechanical influences
- high tensile strength and elongation

Particularly, it has the advantage of having excellent welding capabilities, which is important for the present invention since such capabilities enable the making of tight joints between adjacent pipe insulating sections.

In figure 1 is presented as a perspective sketch an insulating section 4 from one of its ends, hereinafter called the "first end". The stone wool section 1 is split along its entire length, the splitting being designated by reference number 3. At one of the two edges of the lengthwise splitting 3 the protective membrane made of polyvinyl chloride plastified (PVC-P) reinforced with a woven polyester fabric mesh extends beyond this edge of the stone wool section 1, thereby forming a strip 2a extending lengthwise of the insulating section 1 along said edge. This strip 2a of said protective membrane 2 is intended for covering the joint 6 of the two edges of the splitting 3 when the section 4 has been installed around a pipe. At said first end of the pipe insulating section 4 the stone wool layer 1 and the said membrane 2 are in the same plane, this plane being essentially perpendicular to the longitudinal axis X of the pipe section. In other words, at said first end, the membrane 2 covers the outer surface of the stone wool section without extending beyond the stone wool section 1.longitudinally (along axis X).

In figure 2 is presented as a sectioned perspective sketch the same insulating section 4 from its other end, hereinafter called the "second end". The figurative section in figure 2 is obtained by "sectioning" the insulating section 4 in figure 1 in the plane of the axes X and Y, this plane being in the plane of the paper in figure 2. At said second end of the insulating section 4 the protective membrane 2 longitudinally extends (along axis X) beyond the end of the stone wool section 1, thereby forming a strip 2b intended to circumferentially cover a part of a neighbouring pipe section's outer surface, thereby enabling the making of a sealed joint 6 between said pipe section and its neighbouring pipe section by heat-welding strip 2b onto the protective membrane 2 of the neighbouring pipe insulating section 4.

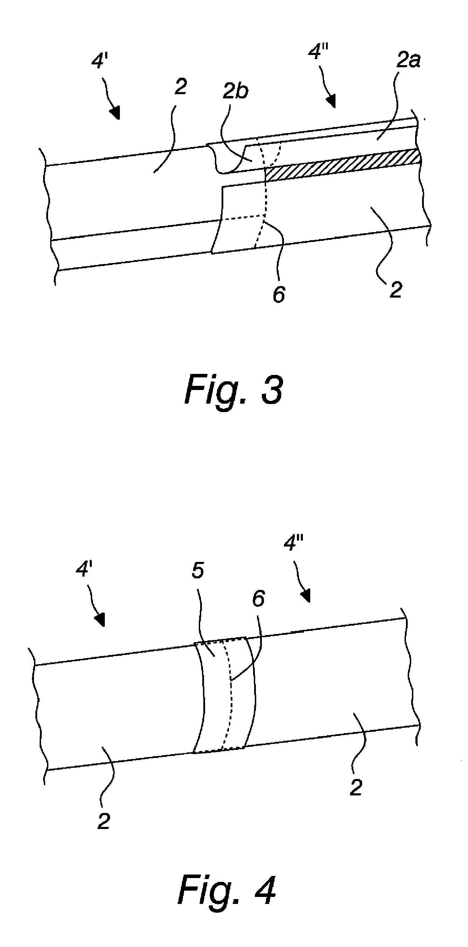

Heat-welding of the membrane 2 at a joint between two neighbouring (i.e. successive) pipe insulating sections 4 is pictured in figure 3 and done in the following way:
- the "second end" (i.e. with strip 2b) of a second insulating section 4" is attached to the "first end" (i.e. without an extension strip 2b) of a first insulating section 4'
- the lengthwise strip 2a of said second insulating section 4" is heat-welded using any known tools onto the membrane 2 of the very same section 4" on the other side of its splitting 3
- the strip 2b of said second section 4" is heat-welded using any known tools onto the protective membrane 2 of said first section 4', which already has had its lengthwise strip 2a heat-welded onto the membrane 2 on the other side of the splitting 3

In another preferable embodiment of the invention shown in figure 4, the insulating section 4 **does not have an extension strip 2b,** i.e. the protective layer 2 does not extend beyond the second end (nor the first end) of the stone wool section 1. For sealing a joint 6 between two pipe insulating sections 4' and 4" of this embodiment, fitted one after the other, one will instead use a **separate stripe 5** made of the same material as the protective layer 2 on the pipe sections 4' and 4". Particularly, when the protective layer 2 used is a membrane made of polyvinyl chloride plastified (PVC-P), preferably reinforced with woven polyester fabric mesh, the separate stripe 5 used may also be made of PVC-P, with or without a reinforcing woven polyester fabric mesh. In this embodiment the lengthwise protective layer strip 2a of each insulating section 4' and 4" is first welded onto its own membrane 2 on the other side of the splitting 3. Thereafter the sealing of the joint 6 between two successive insulating sections 4' and 4" is performed by heat-welding the separate stripe 5 which is arranged around the two pipe sections 4' and 4" so that it fully covers the joint 6 and extends longitudinally over the two sections for at least some distance on both sides of the joint 6. The sealing of the separate stripe 5 is done by heat-welding using simple tools, such as a roller and a builder's air-heater.

Instead of using heat-welding for making joints and closing the membrane 2 around the stone wool sections 1, one may alternatively use adhesives, solvents, or the like, but heat-welding is preferable with a membrane comprising polyvinyl chloride plastified (PVC-P) reinforced with a woven polyester fabric mesh.

## Claims

1. An anti-corrosive stone wool section (4) for insulating purposes, comprising at least one stone wool layer (1), **characterised in that** the stone wool layer (1) is provided on at least one surface with a protective layer (2) being a membrane made of polyvinyl chloride plastified (PVC-P) which is water proof but water vapour permeable, said protective layer extending beyond at least one, preferably only one, of the edges of a splitting (3) of the stone wool section (1), thereby forming a strip (2a) extending lengthwise of the insulating section (4) and intended for covering the joint (6) of the two edges of the splitting (3) in a sealed manner.

2. A stone wool section according to claim 1, wherein the protective layer (2) is heat-weldable and said strip (2a) covering said joint (6) is sealable by heat-welding.

3. A stone wool section according to claim 2, wherein the membrane of polyvinyl chloride plastified (PVC-P) is reinforced with woven polyester fabric mesh.

4. A stone wool section according to any of claims 1-3, wherein said protective layer is provided on the outer surface of the stone wool section.

5. A stone wool section according to claim 4, wherein the protective layer (2) also extends beyond at least one, preferably only one, of the ends of the stone wool section (1), thereby forming a strip (2b) intended to circumferentially cover at least a part of a second successive pipe section's protective layer (2) in a sealed, preferably heat-welded, manner.
